# EUROPEAN PATENT APPLICATION

(11) **EP 4 174 827 A1**
(43) Date of publication of application: **03.05.2023**
(21) Application number: 21834572.6
(22) Date of filing: 16.06.2021
(51) Int. Cl.: G09B 19/00, G06Q 50/20

(54) **ANSWER EVALUATION METHOD, RECORDING MEDIUM, AND INFORMATION PROCESSING DEVICE**

(30) Priority: 30.06.2020 JP 2020113100; 06.05.2021 JP 2021078509
(71) Applicant: Casio Computer Co., Ltd., Tokyo 151-8543 (JP)
(72) Inventor: ONO, Manato, Hamura-shi, Tokyo 205-8555 (JP)
(74) Representative: Grünecker Patent- und Rechtsanwälte PartG mbB
(86) International application number: PCT/JP2021/022943
(87) International publication number: WO 2022/004395

(57) **Abstract**

An answer evaluation method that is executed by an answer evaluating system includes acquiring information of an answer that is an evaluation target corresponding to a question, and information of a comprehensive evaluation method, which is a method of determining a comprehensive evaluation of the answer based on an evaluation on the answer with respect to one evaluation item or each of two or more evaluation items for evaluating the answer represented by the information of the answer; and outputting information representing the comprehensive evaluation of the answer and acquired based on the answer represented by the acquired information of the answer and the comprehensive evaluation method represented by the acquired information of the comprehensive evaluation method.

## Description

### TECHNICAL FIELD

The present disclosure relates to an answer evaluation method, a recording medium and an information processing apparatus.

### BACKGROUND ART

In recent years, the introduction of ICT (Information and Communication Technology) devices into school education is progressing. Along with this, since chances to acquire, as electronic information significantly increases, answers, which are grading targets for questions, it is expected that automatic grading technology using a computer will be promoted and burdens on teachers will be reduced.

In a CAD examination grading system disclosed in JP-A-2006-251203, when an answer of an examinee exactly matches a model answer prepared in advance, the answer is treated as a correct answer.

In the CAD examination grading system disclosed in JP-A-2006-251203, a partial point can be given by further changing a grading item, which is managed as a setting of the system, to set an item desired by a grader to a grading target. However, since a content of a grading program is fixed, the grader cannot flexibly change a point allocation method for each grading item.

### CITATION LIST

### PATENT LITERATURE

PTL 1: JP-A-2006-251203

### SUMMARY OF INVENTION

### TECHNICAL PROBLEM

An answer evaluation method according to one embodiment of the present invention is an answer evaluation method that is executed by an answer evaluating system, and including acquiring information of an answer that is an evaluation target corresponding to a question, and information of a comprehensive evaluation method, which is a method of determining a comprehensive evaluation of the answer based on an evaluation on the answer with respect to one evaluation item or each of two or more evaluation items for evaluating the answer represented by the information on the answer; and outputting information representing the comprehensive evaluation of the answer and acquired based on the answer represented by the acquired information of the answer and the comprehensive evaluation method represented by the acquired information of the comprehensive evaluation method.

A recording medium according to one embodiment of the present invention is a non-transitory computer-readable recording medium having a program recorded thereon that can be executed by at least one processor of an information processing apparatus, the processor being configured to acquire information of an answer that is an evaluation target corresponding to a question, and information of a comprehensive evaluation method, which is a method of determining a comprehensive evaluation of the answer based on an evaluation on the answer with respect to one evaluation item or each of two or more evaluation items for evaluating the answer represented by the information of the answer; and to output information representing the comprehensive evaluation of the answer and acquired based on the answer represented by the acquired information of the answer and the comprehensive evaluation method represented by the acquired information of the comprehensive evaluation method.

An information processing apparatus according to one embodiment of the present invention includes at least one processor configured to execute a program stored in a storage unit, the processor being configured to cause an acquisition unit to acquire information of an answer that is an evaluation target corresponding to a question, and information of a comprehensive evaluation method, which is a method of determining a comprehensive evaluation of the answer based on an evaluation on the answer with respect to one evaluation item or each of two or more evaluation items for evaluating the answer represented by the information of the answer; and to cause an output unit to output information representing the comprehensive evaluation of the answer and acquired based on the answer represented by the acquired information of the answer and the comprehensive evaluation method represented by the acquired information of the comprehensive evaluation method.

### BRIEF DESCRIPTION OF DRAWINGS

[FIG. 1] FIG. 1 shows an example of a configuration of a system 1.
[FIG. 2] FIG. 2 is a block diagram showing an example of a configuration of a client terminal 10.
[FIG. 3] FIG. 3 is a block diagram showing an example of a configuration of a server apparatus 20.
[FIG. 4] FIG. 4 is a sequence diagram for illustrating communication between the client terminal 10 and the server apparatus 20.
[FIG. 5] FIG. 5 shows an example of a grading screen before input of information.
[FIG. 6] FIG. 6 shows an example of the grading screen after input of information.
[FIG. 7] FIG. 7 shows an example of an evaluation item.
[FIG. 8] FIG. 8 shows an example of a structure of a grading request file.
[FIG. 9] FIG. 9 shows an example of a flowchart of automatic grading processing.
[FIG. 10] FIG. 10 shows an example of a relationship among a model answer, an answer and a comprehensive evaluation.
[FIG. 11] FIG. 11 shows an example of a structure of a grading result file.
[FIG. 12] FIG. 12 shows another example of the evaluation item.
[FIG. 13] FIG. 13 shows another example of a grading logic.
[FIG. 14] FIG. 14 illustrates an example of an option setting about a mathematical equivalence.
[FIG. 15] FIG. 15 shows another example of the relationship among the model answer, the answer and the comprehensive evaluation.
[FIG. 16] FIG. 16 is another example of a sequence diagram for illustrating communication between the client terminal 10 and the server apparatus 20.
[FIG. 17] FIG. 17 is still another example of the sequence diagram for illustrating communication between the client terminal 10 and the server apparatus 20.
[FIG. 18] FIG. 18 is yet still another example of the sequence diagram for illustrating communication between the client terminal 10 and the server apparatus 20.
[FIG. 19] FIG. 19 shows another example of the grading screen after input of information.
[FIG. 20] FIG. 20 shows an example of a configuration of word data extracted from a word database.
[FIG. 21] FIG. 21 shows another example of the relationship among the model answer, the answer and the comprehensive evaluation.

### DESCRIPTION OF EMBODIMENTS

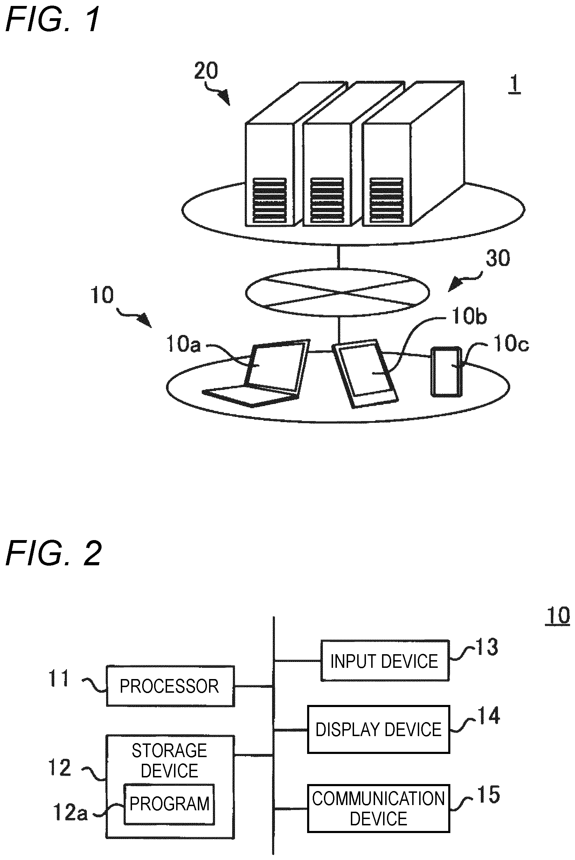

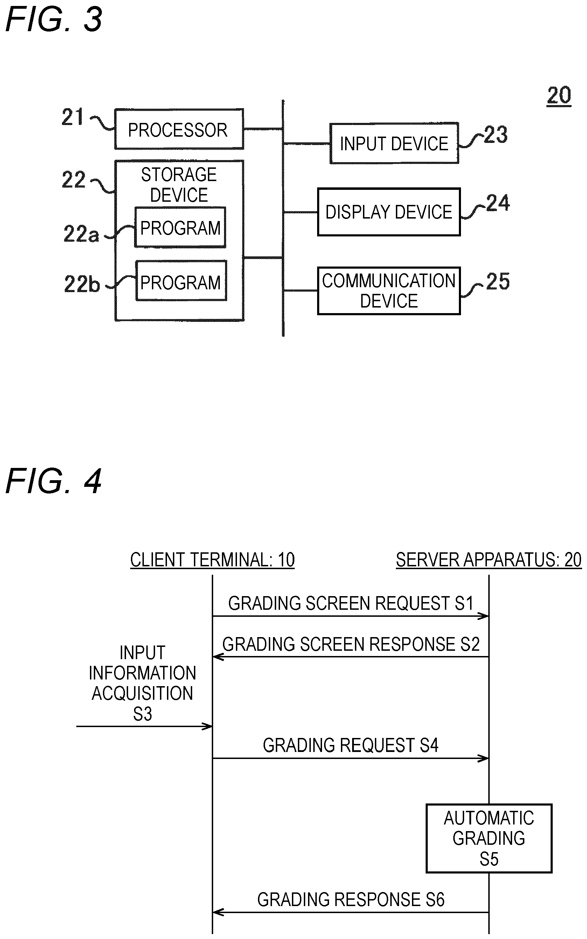

FIG. 1 shows an example of a configuration of a system 1 (answer evaluation system). FIG. 2 is a block diagram showing an example of a physical configuration of a client terminal 10. FIG. 3 is a block diagram showing an example of a physical configuration of a server apparatus 20. The configuration of the system 1 will be described with reference to FIGS. 1 to 3.

The system 1 is an automatic evaluation system configured to output an evaluation result, in response to an evaluation request for requesting an evaluation of an answer, and more specifically, is an automatic grading system configured to output a grading result, in response to a grading request, for example. A field (subject) of questions pertaining to the evaluation request is not particularly limited. Mathematics, Japanese, a foreign language, science (physics, chemistry, biology), society (history, geography, civics) and the like may be possible, and questions from other specialized subjects may also be possible. In addition, as for a question format, a descriptive question other than a multiple-choice question is desirable. In the below, the configuration and operation of the system 1 are described by taking as an example a case of grading an answer including a mathematical expression in the question field such as mathematics.

As shown in FIG. 1, the system 1 includes one or more client terminals 10 and a server apparatus 20, which are connected via a network 30. The network 30 is, for example, the Internet, but may also be other types of networks such as a dedicated line. The system 1 may be a Web application system or a client server system.

The client terminal 10 is a terminal having a display device, and is operated by a user of the system 1. The user of the system 1, i.e., a user of the client terminal 10 is not particularly limited. An evaluator who is the user is typically a grader such as a school teacher. However, an answerer himself/herself such as a school student may also use the system 1. The client terminal 10 is configured to transmit an evaluation request for requesting an evaluation of an answer, which is an evaluation target corresponding to a question, for example, a grading request for requesting a grading of an answer, which is a grading target for a question, to the server apparatus 20, in response to a user input, for example. Note that, the grading request is an example of the evaluation request. The evaluation request includes, for example, information (answer information) on an answer of the answerer to the question, information (model answer information) on a model answer to the question, information (evaluation item information) on one or more evaluation items, and information (comprehensive evaluation method information) on a comprehensive evaluation method that is a method of determining a comprehensive evaluation of the answer but may include at least the answer information and the comprehensive evaluation method information. Hereinafter, in the present specification, the answer that is an evaluation target generated by the answerer such as an examinee is simply referred to as 'answer' and is distinguished from 'model answer' that is a correct answer to the question.

Note that, the answer information may be an answer itself or may also be information for acquiring the answer. For example, the answer information may be information converted so that an answer can be restored or may also be information indicating whereabouts of the answer. The model answer information may be a model answer itself or may also be information for acquiring the model answer. For example, the model answer information may be information converted so that a model answer can be restored or may also be information indicating whereabouts of the model answer. In addition, the evaluation item is a determination element at the time when evaluating an answer, and may be a determination element for adding or deducting a point for grading, for example. The evaluation item information may be an evaluation item itself or may also be information for acquiring the evaluation item. For example, the evaluation item information may be information converted so that an evaluation item can be restored or may also be information indicating whereabouts of the evaluation item. The comprehensive evaluation method is information for specifying a method of determining a comprehensive evaluation of an answer, and is, for example, a grading logic. The comprehensive evaluation of an answer is determined based on an evaluation on an answer with respect to one evaluation item or each of two or more evaluation items for evaluating the answer represented by the answer information. The comprehensive evaluation method information may be a comprehensive evaluation method itself or may also be information for acquiring the comprehensive evaluation method. For example, the comprehensive evaluation method information may be information converted so that a comprehensive evaluation method can be restored or may also be information indicating whereabouts of the comprehensive evaluation method. In addition, the grading logic is a logic for grading an answer based on an evaluation on an answer with respect to one evaluation item or each of two or more evaluation items of the answer. The grading logic information may be a grading logic itself or may also be information for acquiring the grading logic. For example, the grading logic information may be information converted so that a grading logic can be restored or may also be information indicating whereabouts of the grading logic.

As shown in FIG. 1, the client terminal 10 may be a laptop-type client terminal 10a, may also be a tablet-type client terminal 10b or may also be a client terminal 10c such as a smart phone. In addition, the client terminal 10 is not limited to a mobile terminal, and may also be a stationary computer, for example.

Although not specifically limited, the client terminal 10 includes, for example, a processor 11, a storage device 12, an input device 13, a display device 14, and a communication device 15, as shown in FIG. 2.

The processor 11 is, for example, hardware including a CPU (Central Processing Unit) and the like, and is configured to execute a program 12a stored in the storage device 12. Note that, the processor 11 may also include any electric circuit such as a GPU (Graphics processing unit), an ASIC (Application Specific Integrated Circuit), an FPGA (Field-Programmable Gate Array), and a DSP (Digital Signal Processor).

The storage device 12 is, for example, any semiconductor memory, and includes a volatile memory such as a RAM (Random Access Memory) and a non-volatile memory such as a ROM (Read Only Memory) and a flash memory. In addition, the storage device 12 may also include a magnetic storage device, an optic storage device, and other types of storage devices. In the storage device 12, a program 12a that is executed by the processor 11 is stored. Note that, the program 12a stored in the storage device 12 may be one downloaded from the server apparatus 20 via the network 30 and the communication device 15, for example. The storage device 12 may include a non-transitory computer-readable recording medium having a program recorded thereon that can be executed by the processor.

The input device 13 includes, for example, a keyboard, a mouse, a touch panel and the like but may also include a voice input device such as a microphone, and other types of input devices. The display device 14 is, for example, a liquid crystal monitor, an organic EL display, a plasma display, a CRT display or the like but may also be another type of a display device such as a matrix LED panel. The communication device 15 is, for example, a wireless communication device such as a Wi-Fi (registered trademark) module but may also be a wired communication device.

The server apparatus 20 is an information processing apparatus configured to process an evaluation request and to output information representing a comprehensive evaluation of an answer, and may also be, for example, an information processing apparatus configured to process a grading request and to output a grading result. The information (hereinafter, referred to as 'evaluation result') representing a comprehensive evaluation may be output in the server apparatus 20 or may be output to an apparatus different from the server apparatus 20. Note that, an output destination of the information (hereinafter, referred to as 'evaluation result') representing a comprehensive evaluation is not limited to this form. An output of the evaluation result may be, for example, generation of a file including evaluation result information, registration of the evaluation result information in a database, and the like. Note that, the server apparatus 20 may be configured to transmit or not to transmit the evaluation result to the client terminal 10 that is a transmission source of the evaluation request.

The evaluation result that is output by the server apparatus 20 includes at least a comprehensive evaluation of an answer. In addition, the evaluation result may also include an evaluation on an answer with respect to one evaluation item or each of two or more evaluation items included in the evaluation request. The comprehensive evaluation and the evaluation may be arithmetically operable scores such as 0 point, 1 point and 2 points, respectively. In addition, the comprehensive evaluation and the evaluation may also be relative evaluations such as good, normal and bad, respectively. Further, one of the comprehensive evaluation and the evaluation may be a score and the other may be a relative evaluation.

The server apparatus 20 may be configured as a single apparatus, or may be a set of a plurality of apparatuses including a Web server apparatus, an application server apparatus, a database server apparatus and the like. In addition, the server apparatus 20 may also be configured as a distributed computing system.

The server apparatus 20 includes, for example, a processor 21, a storage device 22, an input device 23, a display device 24, and a communication device 25, as shown in FIG. 3, but is not limited to this form.

The processor 21 is, for example, hardware including a CPU (Central Processing Unit) and the like, and is configured to execute a program 22a and a program 22b stored in the storage device 22. Note that, the processor 21 may also include any electric circuit such as a GPU (Graphics processing unit), an ASIC (Application Specific Integrated Circuit), an FPGA (Field-Programmable Gate Array), and a DSP (Digital Signal Processor).

The storage device 22 is, for example, any semiconductor memory, and includes a volatile memory such as a RAM (Random Access Memory) and a non-volatile memory such as a ROM (Read Only Memory) and a flash memory. In addition, the storage device 22 may also include a magnetic storage device, an optic storage device, and other types of storage devices. In the storage device 22, a program 22a and a program 22b that are executed by the processor 21 are stored. Note that, the program 22a is an automatic evaluation program configured to execute automatic evaluation processing, in response to an evaluation request, for example. In addition, the program 22b is, for example, a program that is called from a variety of programs including an automatic evaluation program, and is executed so as to perform processing that is commonly used in a variety of programs, such as function processing (which will be described later) that is used in the automatic evaluation processing. Further, the storage device 22 may store the program 12a that is distributed to the client terminal 10 and is executed on the client terminal 10. Further, the server apparatus 20 may also be configured to distribute the program 22a to the client terminal 10, and the client terminal 10 may also be configured to execute the program 22a received from the server apparatus 20, thereby the automatic evaluation processing, which will be described later. That is, the server apparatus 20 may also be a program distribution server configured to distribute an automatic evaluation program. Further, the server apparatus 20 may also be configured to distribute the program 22b to the client terminal 10, in addition to the program 22a.

The input device 23 includes, for example, a keyboard, a mouse, a touch panel and the like but may also include a voice input device such as a microphone, and other types of input devices. The display device 24 is, for example, a liquid crystal monitor, an organic EL display, a plasma display, a CRT display or the like but may also be another type of a display device such as a matrix LED panel. The communication device 25 may be a wireless communication device or a wired communication device.

In the system 1 configured as described above, the server apparatus 20 is configured to automatically perform evaluation processing and to output an evaluation result, in response to an evaluation request transmitted from the client terminal 10. Therefore, according to the system 1, since the evaluator such as a grader does not have to manually grade and evaluate an answer, it is possible to considerably reduce a burden of an answer evaluation operation (grading operation).

In addition, the evaluation request includes the comprehensive evaluation method information (and the evaluation item information) together with the answer information (and the model answer information). Therefore, even when the system 1 is shared by many users (graders, evaluators), it is possible to securely designate the comprehensive evaluation method such as a grading logic that is used for grading of the answer. Such features of the system 1 are largely different from a system of the related art configured to operate by a fixed grading logic. This allows the system 1 to flexibly respond to requests of evaluators who have different minds about evaluation. In addition, since it is possible to securely designate the comprehensive evaluation method that is used for evaluation of an answer, it is possible to freely select a timing of evaluation processing with respect to a timing of the evaluation request. For this reason, under the environment where the system 1 is shared, for example, it becomes easy to collectively grade evaluation requests received during the day by batch processing at night.

In the system 1, the comprehensive evaluation method may be made different for each answer. For this reason, even when the system is used by the same evaluator, it is possible to make an evaluation criterion different, depending on a level of an answerer, for example. Therefore, according to the system 1, it is possible to perform detailed evaluation, according to an educational concept of the evaluator.

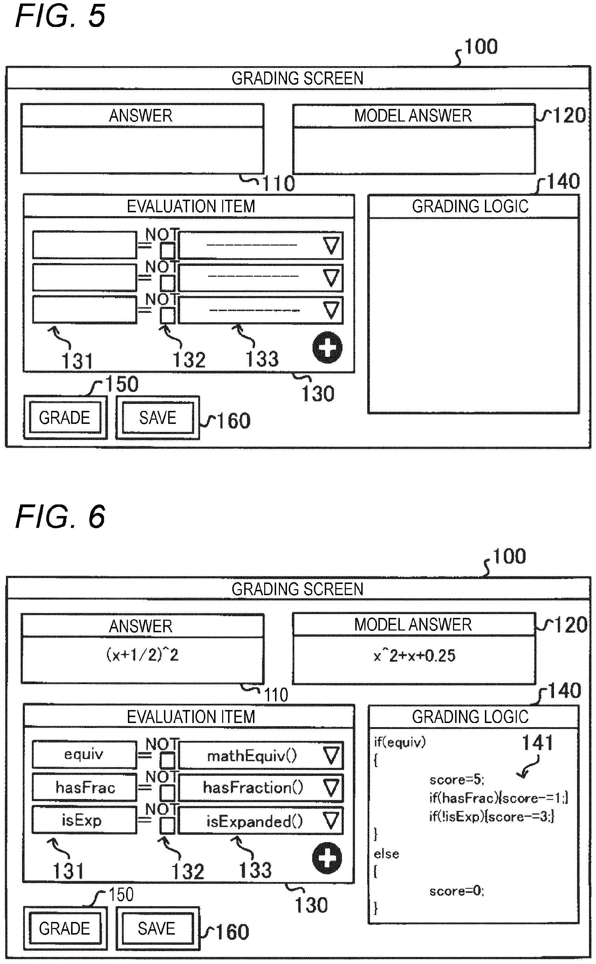

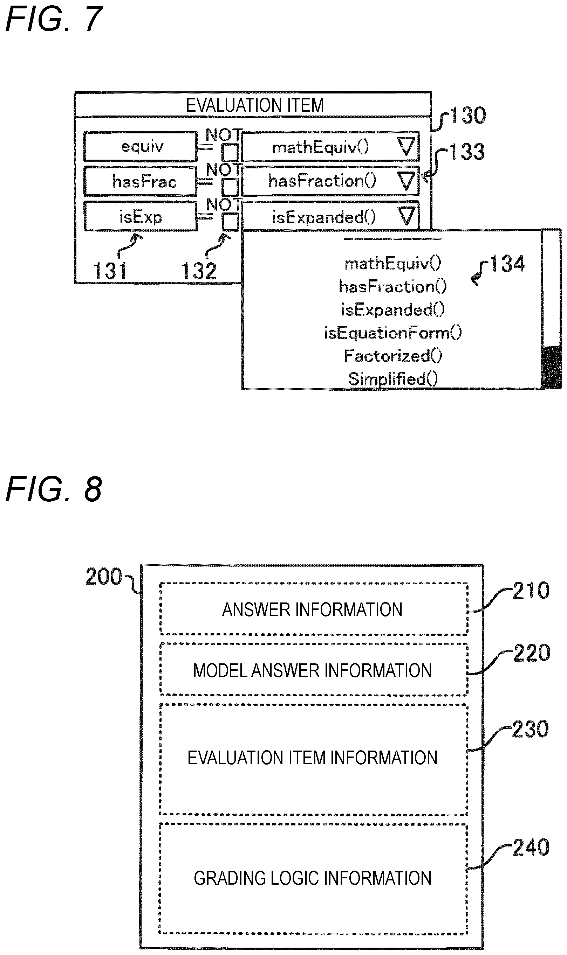

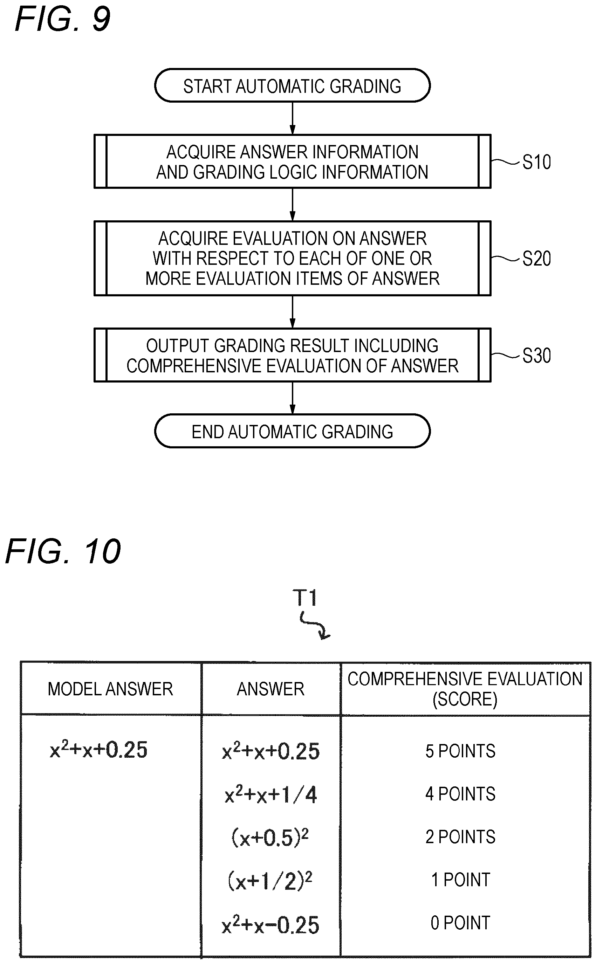

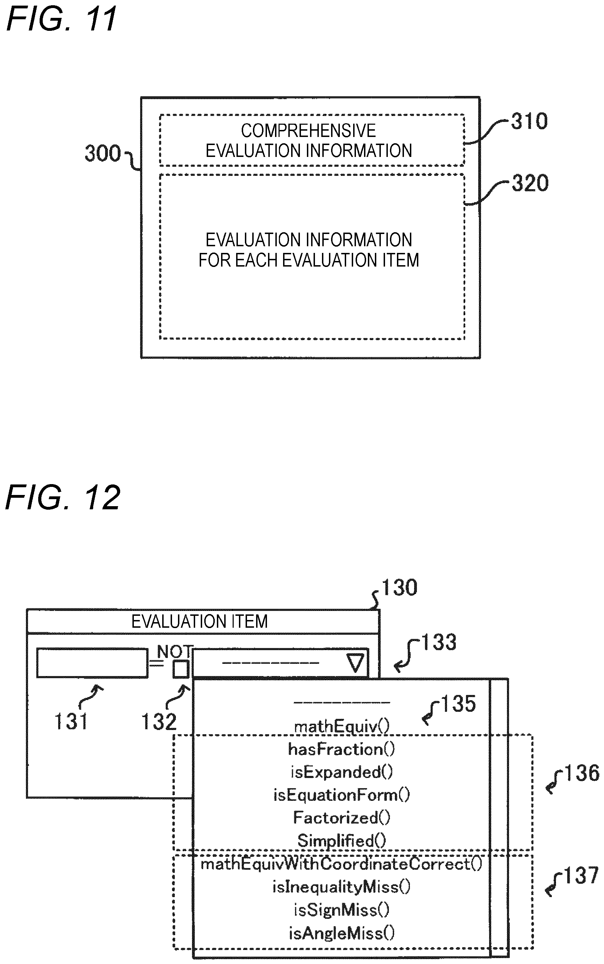

FIG. 4 is a sequence diagram for illustrating communication between the client terminal 10 and the server apparatus 20. FIG. 5 shows an example of a grading screen before input of information. FIG. 6 shows an example of the grading screen after input of information. FIG. 7 shows an example of an evaluation item. FIG. 8 shows an example of a structure of a grading request file. FIG. 9 shows an example of a flowchart of automatic grading processing. FIG. 10 shows an example of a relationship among a model answer, an answer and a comprehensive evaluation. FIG. 11 shows an example of a structure of a grading result file. Hereinafter, an example of specific operations of the system 1 is described by taking as an example a case where the system 1 is a Web application system configured to implement an automatic grading method, while referring to FIGS. 4 to 11. Note that, the automatic grading method described below is an example of an answer evaluation method of evaluating an answer.

A user who uses an automatic grading function provided by the system 1 first activates a Web browser installed in the client terminal 10 and inputs a predetermined URL. Thereby, the client terminal 10 requests the server apparatus 20 to transmit display data for displaying a grading screen (step S1 in FIG. 4), and the server apparatus 20 transmits display data for displaying a grading screen 100 shown in FIG. 5, in response to the request from the client terminal 10 (step S2 in FIG. 4).

As shown in FIG. 5, the grading screen 100 is an input screen or an editing screen including an answer field 110, a model answer field 120, an evaluation item field 130 and a grading logic field 140, and is an example of an interface for editing grading logic information that is an example of the comprehensive evaluation method information. That is, step S2 is an example of the step of providing an interface for editing the comprehensive evaluation method information. The answer field 110, the model answer field 120 and the grading logic field 140 are respectively areas for inputting and editing an answer, a model answer and a grading logic, and may be constituted by text boxes, for example. The evaluation item field 130 is an area for inputting and editing an evaluation item, and includes, for example, a text box 131, a check box 132 and a list box 133. The list box 133 is used so as to designate a function that is used as an evaluation item, from functions prepared in advance. The text box 131 is to define a name of a variable for storing an output obtained by inputting an answer to a function designated in the list box 133. Note that, in a case where the check box 132 is checked, a result of a NOT operation on an output of the function is stored in the variable defined in the text box 131. That is, an evaluation on an evaluation item of an answer is stored in the variable defined in the text box 131.

When the grading screen is displayed on the client terminal 10, the user inputs information necessary to execute automatic grading processing, on the grading screen. As a result, the client terminal 10 acquires the information input by the user (step S3 in FIG. 4).

FIG. 6 shows an aspect where "(x+1/2)^2" as an answer is input in the answer field 110 and "x^2+x+0.25" as a model answer is input in the model answer field 120. In addition, in the evaluation item field 130, an aspect is shown in which an output of a function mathEquiv() for determining whether an answer and a model answer are mathematically equivalent is defined as a variable "equiv", an output of a function hasFraction() for determining whether a fraction is included in an answer is defined as a variable "hasFrac" and an output of a function isExpanded() for determining whether an answer is described in an expanded form is defined as a variable "isExp". Further, in the grading logic field 140, an aspect is shown in which a grading logic 141 for calculating a score, which is a comprehensive evaluation of an answer, by using the variables defined in the evaluation item field 130 is described.

The grading logic 141 is a logic of setting a comprehensive evaluation to 1 point or larger when an answer and a model answer are mathematically equivalent, and setting a comprehensive evaluation to 0 point when an answer and a model answer are not mathematically equivalent. More specifically, in the grading logic 141, when an answer and a model answer are mathematically equivalent, a fraction is not included in the answer and the answer is appropriately expanded, 5 points that are the highest point are given. On the other hand, even when an answer and a model answer are mathematically equivalent, if a fraction is included in the answer, 1 point is deducted, and if the answer is not appropriately expanded, 3 points are deducted. In this way, the grading logic 141 includes point allocation information (in this example, 5 points, -1 point, -3 points) allotted to one evaluation item or each of two or more evaluation items. As shown in FIG. 6, when an answer and a model answer have a mathematically equivalent relationship, dissimilarity between the answer and the model answer is evaluated using these functions and a comprehensive evaluation is adjusted by deducting points according to factors of the dissimilarity. By doing so, it is possible to deduct partial points even for a mathematically correct answer.

Note that, the grading logic 141 that is input to the grading logic field 140 is not limited to the above example, and can be freely described by the grader. Further, a logic using functions other than the above-described three functions may also be described in the grading logic field 140. For example, as shown in FIG. 7, a function list 134 that can be selected from the list box 133 includes functions such as isEquationForm(), Factorized() and Simplified(), in addition to the above-described three functions. The grading logic may also be described using these functions.

The function isEquationFormU is a function for determining whether an answer satisfies a format designated together with the answer. The function Factorized() is a function for determining whether an answer is described in a factorized format. The function Simplified() is a function for determining whether an answer is described in an organized format that has been reduced, rationalized or the like.

When the user inputs information to the grading screen and pushes a button 150, the client terminal 10 transmits, to the server apparatus 20, a grading request generated based on the information input to the grading screen (step S4 in FIG. 4). Note that, when the user pushes a button 160 in a state where the information is input to the grading screen, the client terminal 10 may save a grading request transmitted or to be transmitted in a file (hereinafter, referred to as 'grading request file'). The client terminal 10 may read the grading request file to generate a grading request or further edit the read grading request file to generate a grading request, instead of generating a grading request from the input of the grading screen.

FIG. 8 shows an example of a grading request file 200 that is output by pushing the button 160. In the grading request file 200 shown in FIG. 8, answer information 210, model answer information 220, evaluation item information 230, and grading logic information 240 are included as a data format of a text format, such as a JSON format and an XML format, for example. For this reason, the user who is a grader can generate a grading request file for each answerer by replacing the answer information 210 of the grading request file 200 with an answer corresponding to the answerer, so that it is possible to considerably reduce a burden of an operation of generating a grading request.

When the grading request is transmitted from the client terminal 10, the server apparatus 20 performs automatic grading processing shown in FIG. 9 (step S5 in FIG. 4). Note that, the automatic grading processing shown in FIG. 9 is performed by the processor 21 of the server apparatus 20 executing the program 22a stored in the storage device 22, for example.

When the automatic grading processing is started, the processor 21 first acquires the answer information and the grading logic information (step S10). That is, the processor 21 is an example of the acquisition unit configured to acquire the answer information and the grading logic information. Note that, in step S10, at least the answer information and the grading logic information may be acquired. However, in the below, an example where the model answer information and one or more evaluation item information are acquired, in addition to these information, is described.

In step S10, the processor 21 first receives the grading request. That is, the processor 21 collectively receives the answer information 210, the model answer information 220, the evaluation item information 230 and the grading logic information 240. This allows the server apparatus 20 (processor 21) to recognize that the answer information 210, the model answer information 220, the evaluation item information 230 and the grading logic information 240 are associated with each other. In step S 10, at least the answer information 210 and the grading logic information 240 may be collectively received. This processing is an example of the processing in which the server apparatus 20 acquires the information of the grading logic, in response to the reception of the input to the grading screen in step S3 on the client terminal 10 receiving the display data of the grading screen. Then, the processor 21 analyzes the grading request to extract the answer information, the model answer information, one or more evaluation item information and the grading logic information. In addition, the processor 21 specifies the answer, the model answer information, one or more evaluation items and the grading logic, based on the answer information, the model answer information, one or more evaluation item information and the grading logic information.

Next, the processor 21 acquires an evaluation on an answer with respect to one evaluation item or each of two or more evaluation items of the answer (step S20). That is, the processor 21 is an example of the second acquisition unit configured to acquire each evaluation. In step S20, the processor 21 acquires an evaluation with respect to one evaluation item or each of two or more evaluation items of the answer, based on the answer and the one or more evaluation items specified from the grading request in step S10. Note that, the processor 21 may also acquire an evaluation with respect to each of one or more evaluation items of the answer, based on the answer, the model answer and the one or more evaluation items. Specifically, the processor 21 acquires an evaluation with respect to an evaluation item from a common module by calling a function corresponding to the evaluation item provided by the common module (program 22b) from the automatic grading program (program 22a) under execution. More specifically, the processor 21 acquires an evaluation as to whether the answer and the model answer are mathematically equivalent, in a form of being stored in equiv, by designating the answer and the model answer as arguments and calling the function mathEquiv(). In addition, the processor 21 acquires an evaluation as to whether a fraction is included in the answer, in a form of being stored in the variable hasFrac, by designating the answer as an argument and calling the function hasFraction(). Further, the processor 21 acquires an evaluation as to whether the answer has an expanded format, in a form of being stored in the variable isExp, by designating the answer as an argument and calling the function isExpanded().

At the end of the automatic grading processing, the processor 21 outputs a grading result, which is information (evaluation result) representing a comprehensive evaluation of the answer (step S30). That is, the processor 21 is an example of the output unit configured to output a grading result. In step S30, the processor 21 outputs the grading result, based on the grading logic and the answer. Specifically, the processor outputs the grading result, based on the grading logic acquired in step S10 and the evaluation acquired in step S20 by using the answer and the evaluation item. More specifically, the processor 21 calculates a score, which is a comprehensive evaluation, by executing the grading logic by using the evaluations stored in the variables, and outputs a grading result including the score. In this way, by calculating the score by combining the respective evaluations of the evaluation items and the grading logic, a flexible grading corresponding to the answer is possible, as shown in a table T1 of FIG. 10.

FIG. 10 shows an example of a relationship among a model answer, an answer and a comprehensive evaluation. In this example, four answers that are mathematically equivalent to the model answer are respectively graded with different scores. Specifically, a reference point of 5 points are allotted to a mathematically equivalent answer, one point is deducted for an answer including a fraction, 3 points are deducted for an answer that is insufficiently expanded, and 4 points (1 point + 3 points) are deducted for an answer that includes a fraction and is insufficiently expanded, so that the mathematically equivalent answers are graded with four different scores.

The grading result output in step S30 may be output to a file or may also be output and registered in a database. FIG. 11 shows an example of a grading result file 300 including the grading result output from the server apparatus 20. As shown in FIG. 11, the grading result file 300 may include evaluation information 320, which is information of an evaluation with respect to each evaluation item, in addition to comprehensive evaluation information 310 that is information of a comprehensive evaluation (score). The evaluation information 320 is included in the grading result file 300, so that it can be used as a reference for answerer's future learning because the answerer receiving the grading result can perceive the evaluation item used for the comprehensive evaluation. In addition, the grading result file 300 may include the grading result, as a data format of a text format such as a JSON format and an XML format, for example, similar to the grading request file 200. The output of the grading result in a text format has a merit that the editing and processing can be easily performed. Further, the output of the grading result in a structuralized format such as a JSON format and an XML format has a merit that the grading result can be easily used in other applications.

When the automatic grading processing shown in FIG. 9 is over, the server apparatus 20 responds to the grading request by transmitting the grading result to the client terminal 10 (step S6 in FIG. 4). Note that, the response (hereinafter, referred to as 'grading response') to the grading request may not include the grading result. In addition, in a case where the grading result is not included, after receiving the grading request, the server apparatus 20 may transmit the grading response before the automatic grading processing is executed or completed.

As described above, according to the automatic grading method, the automatic grading program that is executed on the server apparatus 20, and the server apparatus 20 described in the present embodiment, the grading logic information (and the evaluation item information) is acquired, in addition to the answer information (and the model answer information), and the grading result generated based on these information is output. This makes it possible to implement the automatic grading flexibly corresponding to the request of the graders who have different minds about evaluation. More specifically, by calculating the comprehensive evaluation as a score by using the grading logic including one or more evaluation items and the point allocation information allotted to one evaluation item or each of two or more evaluation items, it is possible to easily perform the grading corresponding to the answer.

Note that, in the present embodiment, the example has been shown in which one or more evaluation items included in the grading request include a first item (for example, the function mathEquiv()) for defining, as an evaluation item, whether or not to satisfy the mathematical equivalence between the answer and the model answer and one or more second items (for example, the function hasFraction(), the function isExpandedU, and the like) for defining, as an evaluation item, whether or not to satisfy one factor or each of two or more factors that deny an expressive sameness between the answer and the model answer and the grading logic includes a logic of adjusting the comprehensive evaluation (deducting a point) according to the evaluation of one second item or each of two or more second items when the evaluation on the first item is positive. According to this example, even though the answer and the model answer do not exactly match in terms of expression, when they have a mathematically equivalent relationship, it is possible to easily perform grading of giving a certain degree of point allocation. In addition, even an answer having a mathematically equivalent relationship with a model answer can be graded with a different score, depending on the factor that denies the sameness. Note that, it can be said that the second item is an item for defining, as an evaluation item, a condition that is satisfied when an answer is mathematically equivalent but is different in terms of mathematical representation.

However, the evaluation items and the configuration of the grading logic are not limited to the above-described example. For example, one or more evaluation items included in the grading request may also include one or more third items for defining, as an evaluation item, whether or not to satisfy one factor or each of two or more factors that affirm similarity between the answer and the model answer, in addition to the above-described first item and second item. In addition, the grading logic included in the grading request may also include a logic for adjusting the comprehensive evaluation (adding a point) according to an evaluation of one third item or each of two or more third items when an evaluation on the first item is negative. Note that, it can be said that the third item is an item for defining, as an evaluation item, a condition that is satisfied when an answer is not mathematically equivalent but partially matches in terms of mathematical representation.

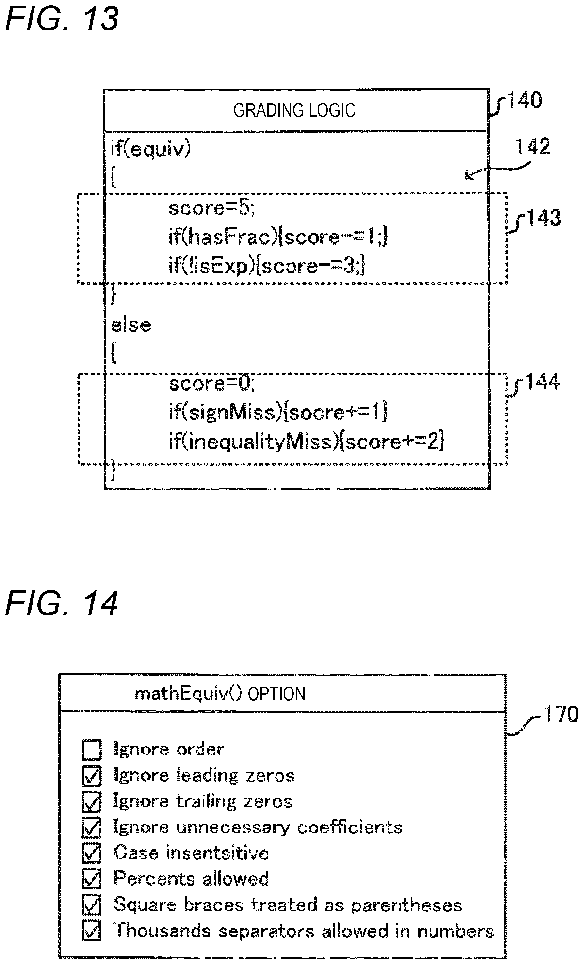

Note that, in a function list that can be selected from a list box 133 provided in an evaluation item field 130 shown in FIG. 12, a function 135, a function group 136, and a function group 137 correspond to the first item, the second item and the third item, respectively. In addition, in a grading logic 142 described in a grading logic field 140 shown in FIG. 13, a logic described in a region 143 is a logic for adjusting a comprehensive evaluation according to an evaluation of one second item or each of two or more second items, and a logic described in a region 144 is a logic for adjusting a comprehensive evaluation according to an evaluation of one second item or each of two or more third items.

Note that, a function mathEquivWithCoordinateCorrect() that is included in the function group 137 is a function for determining the number of coordinate values that match a value of a model answer when an answer has a coordinate format consisting of one or more coordinate values. In addition, a function isInequalityMiss() is a function for determining whether a reason for lack of mathematical equivalence between an answer and a model answer is only the presence or absence of an equal sign in an inequality. A function isSignMiss() is a function for determining whether a reason for lack of mathematical equivalence between an answer and a model answer is only a sign. Further, a function isAngleMiss() is a function for determining whether a reason for lack of mathematical equivalence between an answer and a model answer is only the presence or absence of an angle symbol such as "°" and "π".

As shown in FIGS. 12 and 13, when an answer and a model answer have no mathematically equivalent relationship, similarity between the answer and the model answer is evaluated using these functions and a comprehensive evaluation is adjusted by adding a point according to factors of the similarity. By doing so, it is possible to give a partial point even for a mathematically incorrect answer.

In addition, the system 1 may also be configured to provide the user with a function of adjusting a criterion for determining whether or not a mathematical equivalence. For example, an operation of the function mathEquiv() for determining whether an answer and a model answer are mathematically equivalent may be adjusted by changing an option setting.

FIG. 14 shows an example of an option list 170 for changing an operation of the function mathEquiv(). In this example, an aspect is shown in which "Ignore order" of option settings, which are all enabled in a default, is disabled. By disabling "Ignore order", the function mathEquiv() determines that a difference (for example, 2×3 and 3×2, x^2+x and x+x^2, and the like) in arrangement order of elements, which make up an answer that is to be usually determined as being mathematically equivalent, is not mathematically equivalent. Adjusting the operation of the function mathEquiv() in this way allows more flexible grading at the discretion of the grader.

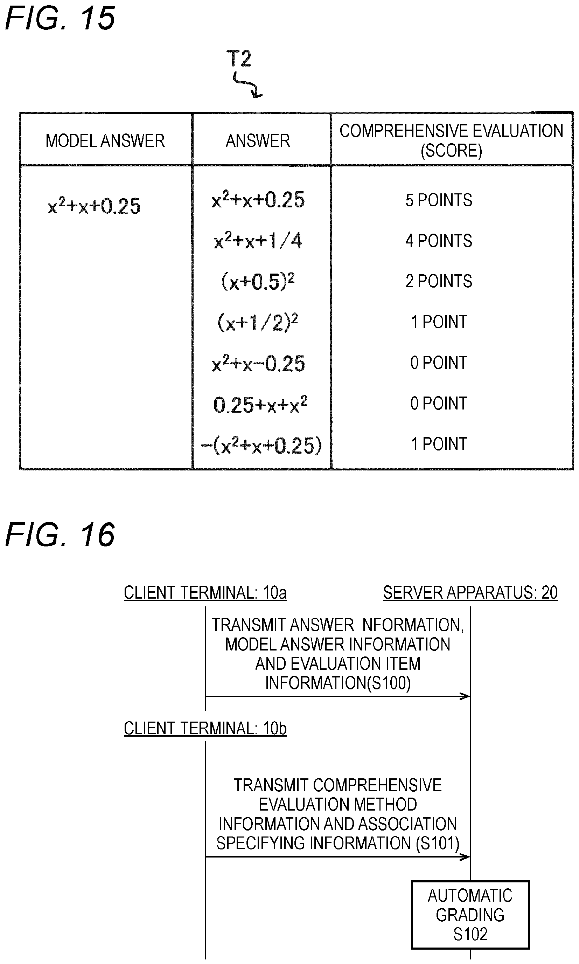

The processing of evaluating the similarity between the answer and the model answer described using FIGS. 12 and 13 and the processing of adjusting the determination criterion for the mathematical equivalence described using FIG. 14 allow more flexible grading, as shown in a table T2 of FIG. 15. FIG. 15 shows that there are a case where a grading is 0 point even when an answer and a model answer have a mathematically equivalent relationship and a case where a grading is not 0 point even when an answer and a model answer do not have a mathematically equivalent relationship.

The above-described embodiment shows a specific example so as to easily understand the invention, and the present invention is not limited to the embodiment and should be understood to include a variety of modifications and alternations of the above-described embodiment. For example, it should be understood that each embodiment can be embodied by modifying the constitutional elements without departing from the gist and scope thereof. In addition, it should be understood that various embodiments can be implemented by appropriately combining the plurality of constitutional elements disclosed in the above-described embodiment. Further, one skilled in the art should understand that various embodiments can be implemented by omitting some constitutional elements from all the constitutional elements shown in the embodiment or adding some constitutional elements to the constitutional elements shown in the embodiment. That is, the answer evaluation method, the program, the program transmission server, the information processing apparatus and the answer evaluation system can be diversely modified and changed without departing from the definitions of the claims.

In the above-described embodiment, the example where the server apparatus 20 acquires the answer information 210, the model answer information 220, the evaluation item information 230 and the grading logic information 240 has been shown. However, as for predetermined information among these information, the information may be prepared in advance and may not be newly acquired. For example, if the model answer and the evaluation item may be fixed, the server apparatus 20 may acquire the answer information 210 and the grading logic information 240. By acquiring at least the answer information 210 and the grading logic information 240, it is possible to allow for flexible grading because the grader can freely change the grading logic.

Further, in the above-described embodiment, the example where the server apparatus 20 collectively acquires the answer information 210, the model answer information 220, the evaluation item information 230 and the grading logic information 240 has been shown. However, these information that is used for grading may be just acquired before the grading, and is not necessarily required to be collectively acquired. For example, as shown in FIG. 16, these information may be acquired from a plurality of client terminals 10 (a client terminal 10a and a client terminal 10b). For example, as shown in FIG. 16, the answer information 210, the model answer information 220 and one or more evaluation item information 230 may be first transmitted from the client terminal 10a and received by the server apparatus 20 (step S 100). Then, the grading logic information 240 (comprehensive evaluation method information) and association specifying information may be transmitted from the client terminal 10b and received by the server apparatus 20 (step S101). Thereafter, automatic grading processing that is similar to the automatic grading processing shown in FIG. 9 may be performed (step S102). Note that, the association specifying information is information capable of specifying mutual association of at least an answer and a comprehensive evaluation method, and is preferably information (such as an ID number set for each information) capable of specifying mutual association of an answer, a model answer, one or more evaluation items and comprehensive evaluation information. By using the association specifying information, it is possible to specify a combination of an answer, a model answer, one or more evaluation items, and comprehensive evaluation information, which are to be used for grading. As a result, it is possible to individually acquire an answer, a model answer, one or more evaluation items and comprehensive evaluation information.

Note that, the description "a plurality of information is individually acquired" means not receiving collectively a plurality of information, i.e., receiving any one or more information and other one or more information among the plurality of information at time intervals, receiving any one or more information of the plurality of information and other one or more information from a plurality of different apparatuses or acquiring the plurality of information by a combined method thereof. In the below, descriptions are given according to an actual example. FIG. 16 shows an example where the information is acquired from the client terminal 10a and the client terminal 10b. However, the association specifying information capable of specifying mutual association of the answer information 210, the grading logic information 240 (comprehensive evaluation method information), the answer and the comprehensive evaluation method may also be acquired from three or more client terminals. That is, the server apparatus 20 may also be configured to individually receive and acquire any one or more information and other one or more information among the answer information 210, the grading logic information 240 (comprehensive evaluation method information) and the association specifying information. In addition, in a case of receiving the answer information 210, the model answer information 220, the evaluation item information 230, the grading logic information 240 and the association specifying information, the server apparatus 20 may also be configured to individually receive any one or more information and other one or more information among these information.

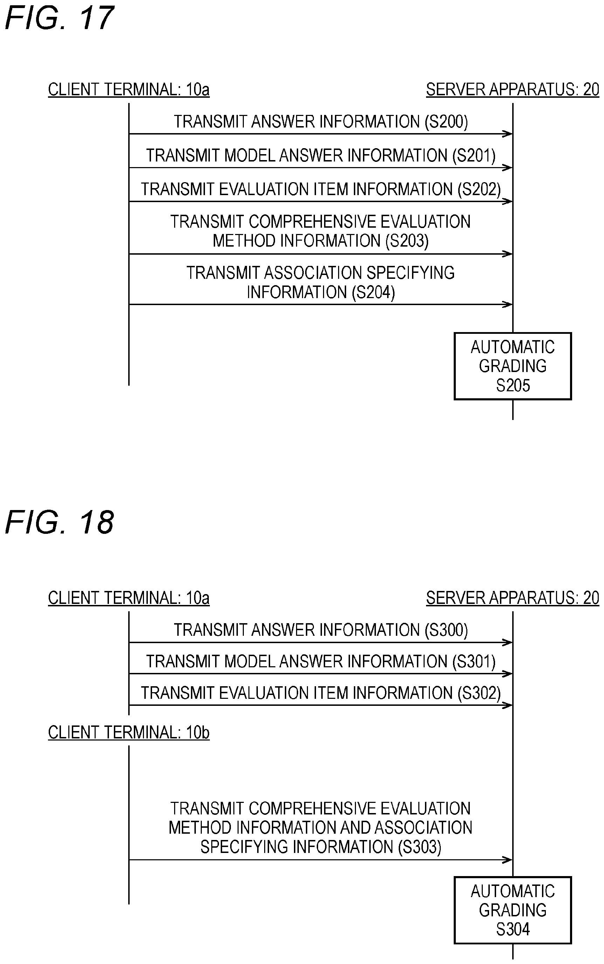

FIG. 16 shows an example where the answer information 210, the model answer information 220, the evaluation item information 230, the grading logic information 240 and the association specifying information are received from the plurality of client terminals 10, and therefore, are individually received. However, these information may also be individually received from the same client terminal 10. For example, as shown in FIG. 17, the server apparatus 20 may individually receive the answer information 210, the model answer information 220, the evaluation item information 230, the grading logic information 240 and the association specifying information from the single client terminal 10a (step S200 to step S204). Thereafter, automatic grading processing that is similar to the automatic grading processing shown in FIG. 9 may be performed on the server apparatus 20 (step S205). Further, as shown in FIG. 18, the server apparatus 20 may individually receive some information among the answer information 210, the model answer information 220, the evaluation item information 230, the grading logic information 240 and the association specifying information from the single client terminal 10a (step S300 to step S302) and receive the other information from the other client terminal 10b (step S303). After receiving the necessary information, automatic grading processing that is similar to the automatic grading processing shown in FIG. 9 may be performed on the server apparatus 20 (step S304).

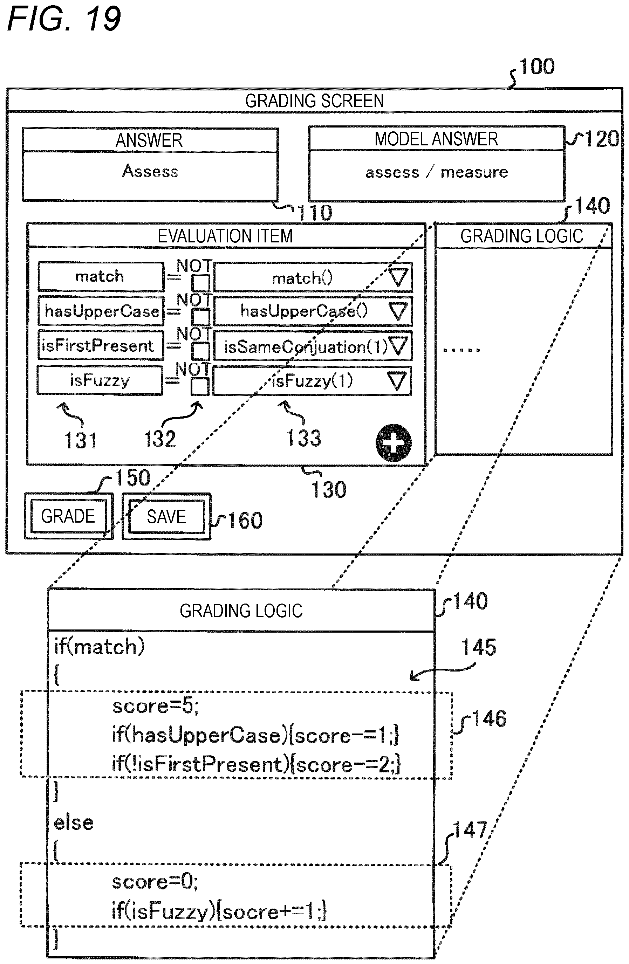

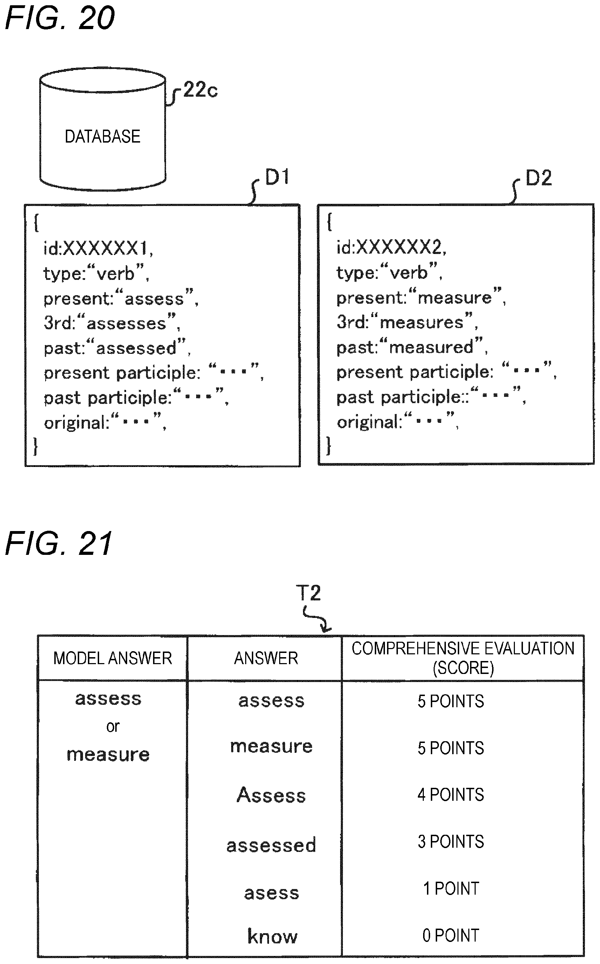

In the above, the case where the answer including a mathematical representation is graded has been described as an example. However, the field of the present application is not limited to the mathematics and the like and can also be applied to grading of English words, Chinese letters and other subjects. FIG. 19 shows another example of the grading screen after input of information. FIG. 20 shows an example of a configuration of word data extracted from a word database. FIG. 21 shows another example of the relationship among the model answer, the answer and the comprehensive evaluation. Hereinafter, a case where the question field is, for example, a foreign language such as English and an answer including a word or a sentence expression is graded is described with reference to FIGS. 19 to 21. Specifically, a case where an answer to a following question is graded is described as an example.

### <Question>

Please answer an English word that applies to the parenthesis () in the following sentence.

Japanese: I assess a new technology (in Japanese).

English: I () a new technology.

First, in response to a request from the client terminal 10, the server apparatus 20 transmits display data for displaying the grading screen 100 (step S1 and step S2 in FIG. 4). Then, when the grading screen 100 is displayed on the client terminal 10, the user inputs information necessary to execute the automatic grading processing to the grading screen 100 and the client terminal 10 acquires the information input by the user (step S3 in FIG. 4). These processing is similar to the above-described case of the mathematics question.

FIG. 19 shows an aspect where "Assess" as an answer is input in the answer field 110 and "assess" and "measure" as a model answer are input in the model answer field 120. In addition, in the evaluation item field 130, an aspect is shown in which an output of a function match() for determining whether or not to satisfy semantical similarity between an answer and a model answer is defined as a variable "match", an output of a function hasUpperCase() for determining whether an upper case is included in an answer is defined as a variable "hasUpperCase", an output of a function isSameConjuation() for determining whether a type of an answer matches a type designated as an argument and designating "1" indicative of the present tense of the first person for an argument is defined as a variable "isFirstPresent", and an output of a function isFuzzy() for determining whether a difference in letter between an answer and a model answer is within an allowed number of letters and designating "1" indicative of one letter as the allowed number of letters for an argument is defined as a variable "isFuzzy". Further, in the grading logic field 140, an aspect is shown in which a grading logic 145 for calculating a score, which is a comprehensive evaluation of an answer, by using the variables defined in the evaluation item field 130 is described.

The grading logic 145 is a logic of setting a comprehensive evaluation to 2 points or larger when an answer and a model answer are semantically similar, and setting a comprehensive evaluation to 0 point or 1 point when an answer and a model answer are not semantically similar. More specifically, in the grading logic 145, when an answer and a model answer are semantically similar, an upper case is not included in the answer and a type of the answer is the present tense of the first person, 5 points that are the highest point are given. In addition, even when an answer and a model answer are semantically similar, if an upper case is included in the answer, 1 point is deducted, and if a type of the answer is not the present tense of the first person, 2 points are deducted. On the other hand, when an answer and a model answer are not semantically similar, if a difference in letter between the answer and the model answer is within one letter, 1 point is given, and if the difference is two or more letters, 0 point is given.

In this way, the grading logic 145 includes point allocation information (in this example, 5 points, -1 point, -2 points) allotted to one evaluation item or each of two or more evaluation items. As shown in FIG. 19, when an answer and a model answer have a semantically similar relationship, factors that deny expressive sameness between the answer and the model answer are evaluated using these functions and a comprehensive evaluation is adjusted by deducting points according to factors of the non-sameness. By doing so, it is possible to deduct partial points even for a semantically correct answer. The reason to adopt such a logic is that even if an answer is semantically similar, the answer different from the model answer, i.e., the answer with no expressive sameness with the model answer is assumed to include a grammatical error and the like. By deducting points according to factors of the expressive non-sameness, it is possible to perform grading, considering such an error. In addition, even when an answer and a model answer do not have a semantically similar relationship, factors that affirm expressive similarity between the answer and the model answer are evaluated using these functions and a comprehensive evaluation is adjusted by adding points according to factors of the similarity. By doing so, it is possible to give partial points even for a semantically incorrect answer, taking into a degree of understanding of the answerer. The reason to adopt such a logic is that an answer that is not semantically similar may include an answer including a clerical mistake and the answer including a clerical mistake is assumed to have an expressive similarity to the model answer. The answer including a clerical mistake indicates that the answerer has a certain degree of understanding of the gist of the question. Therefore, by adding points according to the factors of the expressive similarity, it is possible to perform grading, considering the degree of understanding of the answerer.

Thereafter, when the user inputs information to the grading screen and pushes the button 150, the client terminal 10 transmits, to the server apparatus 20, a grading request generated based on the information input to the grading screen (step S4 in FIG. 4).

When the grading request is transmitted from the client terminal 10, the server apparatus 20 performs automatic grading processing shown in FIG. 9 (step S5 in FIG. 4). In the below, differences from the automatic grading processing for the mathematical question are mainly described.

When the automatic grading processing is started, the processor 21 first acquires the answer information and the grading logic information (step S10), and also acquires an evaluation on an answer with respect to one evaluation item or each of two or more evaluation items of the answer (step S20). In step S20, the processor 21 acquires an evaluation with respect to one evaluation item or each of two or more evaluation items of the answer, based on the answer and the one or more evaluation items specified from the grading request in step S10. The processing of step S10 is similar to the case of the mathematics question. The processing of step S20 is also similar to the case of the mathematics question, except that the different functions are used.

The function isSameConjuation(), which is one of the functions used in step S20, is different from the other functions, in that it accesses the word database 22c shown in FIG. 20 during function processing. The word database 22c may be stored, for example, in the storage device 22 of the server apparatus 20 or may be stored in other devices.

In the word database 22c, data of words is registered. Specifically, for example, for each word, id information for identifying the word, type information for identifying a part of speech of the word, and information predetermined for each part of speech of the word are registered. For example, in a case where the part of speech is a verb, information such as spelling for each type (the present tense of the first person, the present tense of the third person, the past tense, the present participle, the past participle and the prototype) is included, as shown with data D1 and D2 in FIG. 20.

In the processing of the function isSameConjuation(), the processor 21 acquires word data (for example, D1, D2) corresponding to a word of the model answer from the word database 22c, and compares a spelling of a type designated with an argument specified from the word data, and the answer. As a result of the comparison, when both match, True is returned, and when both do not match, False is returned.

At the end of the automatic grading processing, the processor 21 outputs a grading result, which is information (evaluation result) representing a comprehensive evaluation of the answer (step S30). Here, the processor 21 calculates a score, which is a comprehensive evaluation, by executing the grading logic by using the evaluations stored in the variables, and outputs a grading result including the score. In this way, by calculating the score by combining the respective evaluations of the evaluation items and the grading logic, a flexible grading corresponding to the answer is possible, as shown in a table T2 of FIG. 21.

FIG. 21 shows an example of a relationship among a model answer, an answer and a comprehensive evaluation. In this example, four answers that are semantically similar to the model answer and one answer that is not semantically similar to the model answer are given with 1 point or more. Specifically, the model answer is graded with 5 points, an answer including an upper case that should not be originally included is graded with 4 points, an answer that is different in terms of a type is graded with 3 points, and an answer including a clerical mistake is graded with 1 point.

When the automatic grading processing shown in FIG. 9 is over, the server apparatus 20 responds to the grading request by transmitting the grading result to the client terminal 10 (step S6 in FIG. 4).

In this way, the above-described automatic grading processing is not limited to the mathematics question, can be applied to a fill-in-blank question of a foreign language such as English, and can flexibly respond to the request of the graders who have different minds about grading.

Note that, in the present embodiment, the example has been shown in which one or more evaluation items included in the grading request include a first item (for example, the function match()) for defining, as an evaluation item, whether or not to satisfy the semantical similarity between the answer and the model answer and one or more second items (for example, the function hasUpperCase(), the function isSameConjuation(), and the like) for defining, as an evaluation item, whether or not to satisfy one factor or each of two or more factors that deny an expressive sameness between the answer and the model answer and the grading logic includes a logic of adjusting the comprehensive evaluation (deducting a point) according to the evaluation of one second item or each of two or more second items when the evaluation on the first item is positive. According to this example, even though the answer and the model answer do not exactly match in terms of expression, when they have a semantically similar relationship, it is possible to easily perform grading of giving a certain degree of point allocation. In addition, even an answer having a semantically similar relationship with a model answer can be graded with a different score, depending on the factor that denies the sameness.

However, the evaluation items and the configuration of the grading logic are not limited to the above-described example. For example, one or more evaluation items included in the grading request may also include one or more third items for defining, as an evaluation item, whether or not to satisfy one factor or each of two or more factors that affirm expressive similarity between the answer and the model answer, in addition to the above-described first item and second item. In addition, the grading logic included in the grading request may also include a logic for adjusting the comprehensive evaluation (adding a point) according to an evaluation of one third item or each of two or more third items when an evaluation on the first item is negative.

Note that, in the grading logic 145 described in the grading logic field 140 shown in FIG. 19, a logic described in a region 146 is a logic for adjusting a comprehensive evaluation according to an evaluation of one second item or each of two or more second items, and a logic described in a region 147 is a logic for adjusting a comprehensive evaluation according to an evaluation of one third item or each of two or more third items.

Further, FIG. 19 shows the example where different words (assess, measure) that are semantically similar are listed in the model answer. However, words that are semantically similar may also be acquired from a database in which synonyms can be retrieved. In addition, FIG. 19 shows the example where the same point allocation is given to the different words that are semantically similar. However, for example, basic points may be set different, depending on lexeme, such as 5 points for assess and 4 points for measure.

In the above-described embodiments, the example where the system 1 includes the client terminal 10 and the server apparatus 20 has been shown. However, in the system 1, the server apparatus 20 may also serve as the client terminal 10. That is, the grading request may be generated using the server apparatus 20, and the server apparatus 20 itself may be configured to process the generated grading request to output the grading result. In addition, in the system 1, the client terminal 10 may also serve as the server apparatus 20. That is, the grading result may be output with the single body of the client terminal 10.

Further, in the above-described embodiments, the example where the server apparatus 20 itself performs the function processing by calling the common module (program 22b) from the automatic grading program (program 22a) has been shown. However, the relationship between the automatic grading processing and the function processing is not limited to this example. The function processing may also be performed in an apparatus different from the server apparatus 20, for example. In addition, the automatic grading processing and the function processing may be implemented in the same program.

Further, in the above-described embodiments, the example where the highest points are once given to the answer determined as being mathematically equivalent and the final score is calculated by deducting the point due to the relationship with the factors that deny the expressive sameness has been shown. However, the method of calculating the score is not limited to the point deducting method. For example, a predetermined point may be once given to an answer determined as being mathematically equivalent and a final score may be calculated by a point adding method of adding a point according to conditions.

Further, in the above-described embodiments, the example where the evaluation item and the grading logic are individually designated has been shown. However, the method of designating the evaluation item and the grading logic is not limited to this example. The server apparatus 20 may also be configured to store the evaluation item and the grading logic in advance in association with attributes of a question master (for example, a country, a school, a subject in charge, a teacher in charge, and the like), or when the user (for example, a grader or an answerer) designates the attributes of a question master, the server apparatus 20 may read out and use the evaluation item and the grading logic.

Further, in the above-described embodiments, the example where the client is caused to display the dedicated application screen to edit the comprehensive evaluation method information has been shown. However, the interface for editing the comprehensive evaluation method information is not limited to the dedicated application screen. For example, the editing can be made by a command prompt or other interface.

The present application is based on Japanese Patent Application Nos.2020-113100 filed on June 30, 2020 and 2021-078509 filed on May 6, 2021, the contents of which are incorporated herein by reference.

## Claims

1. An answer evaluation method that is executed by an answer evaluating system comprising:
acquiring information of an answer that is an evaluation target corresponding to a question, and information of a comprehensive evaluation method, which is a method of determining a comprehensive evaluation of the answer based on an evaluation on the answer with respect to one evaluation item or each of two or more evaluation items for evaluating the answer represented by the information of the answer; and
outputting information representing the comprehensive evaluation of the answer and acquired based on the answer represented by the acquired information of the answer and the comprehensive evaluation method represented by the acquired information of the comprehensive evaluation method.

2. The answer evaluation method according to Claim 1, comprising providing an interface for editing the information of the comprehensive evaluation method,
wherein acquiring the information of the answer and the information of the comprehensive evaluation method comprises acquiring the information of the comprehensive evaluation method, in response to reception of an input of the information of the comprehensive evaluation method to the interface on a terminal provided with the interface.

3. The answer evaluation method according to Claim 1, wherein acquiring the information of the answer and the information of the comprehensive evaluation method comprises collectively acquiring the information of the answer and the information of the comprehensive evaluation method.

4. The answer evaluation method according to Claim 1, wherein acquiring the information of the answer and the information of the comprehensive evaluation method comprises individually acquiring any one or more information and other one or more information among the information of the answer, the information of the comprehensive evaluation method and association specifying information capable of specifying mutual association of the answer and the comprehensive evaluation method.

5. The answer evaluation method according to Claim 1, comprising further acquiring information of the one or more evaluation items,
wherein the evaluation on the answer with respect to the one evaluation item or each of two or more evaluation items is acquired based on the answer represented by the acquired information of the answer and the one or more evaluation items represented by the acquired information of the one or more evaluation items.

6. The answer evaluation method according to Claim 5, comprising providing an interface for editing the information of the one or more evaluation items,
wherein acquiring the information of the at least one or more evaluation items comprises acquiring the information of the one or more evaluation items, in response to reception of an input of the information of the one or more evaluation items to the interface on a terminal provided with the interface.

7. The answer evaluation method according to Claim 1, comprising further acquiring information of a model answer corresponding to the question,
wherein the evaluation on the answer with respect to the one evaluation item or each of two or more evaluation items is acquired based on the answer represented by the acquired information of the answer, the model answer represented by the acquired information of the model answer, and the one or more evaluation items represented by the acquired information of the one or more evaluation items.

8. The answer evaluation method according to Claim 1, wherein the information representing the comprehensive evaluation of the answer further comprises the evaluation of the answer with respect to the one evaluation item or each of two or more evaluation items.

9. The answer evaluation method according to Claim 1, wherein the comprehensive evaluation is a score, and
wherein the comprehensive evaluation method comprises point allocation information allotted to the one evaluation item or each of two or more evaluation items.

10. The answer evaluation method according to Claim 1, wherein the one or more evaluation items comprise:
a first item for defining, as an evaluation item, whether or not to satisfy a mathematical equivalence between the answer and a model answer; and
one or more second items for defining, as an evaluation item, whether or not to satisfy one factor or each of two or more factors that deny an expressive sameness between the answer and the model answer, and
wherein the comprehensive evaluation method comprises a logic for adjusting the comprehensive evaluation according to an evaluation of the one second item or each of two or more second items when an evaluation on the first item is positive.

11. The answer evaluation method according to Claim 10, wherein the one or more evaluation items further comprise one or more third items for defining, as an evaluation item, whether or not to satisfy one factor or each of two or more factors that affirm a similarity between the answer and the model answer, and
wherein the comprehensive evaluation method comprises a logic for adjusting the comprehensive evaluation according to an evaluation result of the one third item or each of two or more third items when an evaluation on the first item is negative.

12. The answer evaluation method according to Claim 1, wherein the one or more evaluation items comprise:
a first item for defining, as an evaluation item, whether or not to satisfy a semantical similarity between the answer and a model answer; and
one or more second items for defining, as an evaluation item, whether or not to satisfy one factor or each of two or more factors that deny an expressive sameness between the answer and the model answer, and
wherein the comprehensive evaluation method comprises a logic for adjusting the comprehensive evaluation according to an evaluation of the one second item or each of two or more second items when an evaluation on the first item is positive.

13. The answer evaluation method according to Claim 12, wherein the one or more evaluation items further comprise one or more third items for defining, as an evaluation item, whether or not to satisfy one factor or each of two or more factors that affirm an expressive similarity between the answer and the model answer, and
wherein the comprehensive evaluation method comprises a logic for adjusting the comprehensive evaluation according to an evaluation result of the one third item or each of two or more third items when an evaluation on the first item is negative.

14. A non-transitory computer-readable recording medium having a program recorded thereon that can be executed by at least one processor of an information processing apparatus, the processor being configured:
to acquire information of an answer that is an evaluation target corresponding to a question, and information of a comprehensive evaluation method, which is a method of determining a comprehensive evaluation of the answer based on an evaluation on the answer with respect to one evaluation item or each of two or more evaluation items for evaluating the answer represented by the information of the answer; and
to output information representing the comprehensive evaluation of the answer and acquired based on the answer represented by the acquired information of the answer and the comprehensive evaluation method represented by the acquired information of the comprehensive evaluation method.

15. An information processing apparatus comprising at least one processor configured to execute a program stored in a storage unit, the processor being configured to cause:
an acquisition unit to acquire information of an answer that is an evaluation target corresponding to a question, and information of a comprehensive evaluation method, which is a method of determining a comprehensive evaluation of the answer based on evaluation on the answer with respect to one evaluation item or each of two or more evaluation items for evaluating the answer represented by the information of the answer; and
an output unit to output information representing the comprehensive evaluation of the answer and acquired based on the answer represented by the acquired information of the answer and the comprehensive evaluation method represented by the acquired information of the comprehensive evaluation method.
